(19) Europäisches Patentamt
European Patent Office
Office européen des brevets

(11) EP 1 651 683 B1

(12) EUROPÄISCHE PATENTSCHRIFT

(45) Veröffentlichungstag und Bekanntmachung des Hinweises auf die Patenterteilung:
**19.05.2010 Patentblatt 2010/20**

(21) Anmeldenummer: **04740716.8**

(22) Anmeldetag: **07.07.2004**

(51) Int Cl.:
***C08F 8/30*** *(2006.01)* ***C08J 3/24*** *(2006.01)*
***C08L 101/14*** *(2006.01)* ***A61L 15/60*** *(2006.01)*

(86) Internationale Anmeldenummer:
**PCT/EP2004/007398**

(87) Internationale Veröffentlichungsnummer:
**WO 2005/019279 (03.03.2005 Gazette 2005/09)**

(54) **VERFAHREN ZUR NACHVERNETZUNG VON HYDROGELEN MIT BICYCLISCHEN AMIDACETALEN**

METHOD FOR THE SECONDARY CROSSLINKING OF HYDROGELS WITH BICYCLIC AMIDE ACETALS

PROCEDE DE POST-RETICULATION D'HYDROGELS AVEC DES AMIDACETALS BICYCLIQUES

(84) Benannte Vertragsstaaten:
**AT BE BG CH CY CZ DE DK EE ES FI FR GB GR HU IE IT LI LU MC NL PL PT RO SE SI SK TR**

(30) Priorität: **28.07.2003 DE 10334584**

(43) Veröffentlichungstag der Anmeldung:
**03.05.2006 Patentblatt 2006/18**

(73) Patentinhaber: **BASF SE**
**67056 Ludwigshafen (DE)**

(72) Erfinder:
- **DANIEL, Thomas**
  **67165 Waldsee (DE)**
- **RIEGEL, Ulrich**
  **66849 Landstuhl (DE)**
- **ELLIOT, Mark**
  **67063 Ludwigshafen (DE)**
- **VON OEHSEN, Ubbo**
  **68809 Neulussheim (DE)**
- **EXNER, Kai, Michael**
  **69214 Eppelheim (DE)**
- **MASSONNE, Klemens**
  **67098 Bad Dürkheim (DE)**

(56) Entgegenhaltungen:
**EP-A- 0 346 669**
**EP-B1- 0 605 150**
**DE-A- 3 720 883**
**DE-A- 19 854 574**
**US-A- 4 539 376**

- **DATABASE CA [Online] CHEMICAL ABSTRACTS SERVICE, COLUMBUS, OHIO, US; 8. Juni 1995 (1995-06-08), TAKAO, YOSHIKO ET AL: "Formaldehyde-free thermal crosslinking agents and their use on acrylic polymers" XP002308060 gefunden im STN Database accession no. 1995: 594241 -& JP 06 345978 A (NIPPON ZEON CO, JAPAN) 20. Dezember 1994 (1994-12-20)**
- **BUCHHOLZ F.L.; GRAHAM A.T.: 'Modern Superabsorbent Polymer Technology', 1998, WILEY-VCH, NEW YORK, ISBN 0-471-19411-5 Seiten 97 - 98**

EP 1 651 683 B1

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

## Beschreibung

Die vorliegende Erfindung betrifft ein Verfahren zur Nachvemetzung von wasserabsorbierenden Hydrogelen mit bicyclischen Amidacetalen, die so erhältlichen Polymeren sowie ihre Verwendung in Hygieneartikeln und Verpackungsmaterialien.

Unter Nachvemetzung wird die Gel- bzw. Oberflächennachvemetzung von wasserabsorbierenden Hydrogelen verstanden.

Hydrophile, hochquellfähige Hydrogele sind insbesondere Polymere aus (co)polymerisierten hydrophilen Monomeren, Pfropf(co)polymere von einem oder mehreren hydrophilen Monomeren auf einer geeigneten Pfropfgrundlage, vemetzte Cellulose- oder Stärkeether, vernetzte Carboxymethylcellulose, teilweise vernetztes Polyalkylenoxid oder in wässrigen Flüssigkeiten quellbare Naturprodukte, wie beispielsweise Guarderivate. Solche Hydrogele werden als wässrige Lösungen absorbierende Produkte zur Herstellung von Windeln, Tampons, Damenbinden und anderen Hygieneartikeln, aber auch als wasserzurückhaltende Mittel im landwirtschaftlichen Gartenbau verwendet.

Hydrophile, hochquellfähige Hydrogele sind Hydrogele mit einem CRC-Wert [g/g] von bevorzugt größer 15, insbesondere größer 20, besonders bevorzugt größer 25, insbesondere größer 30, insbesondere bevorzugt größer 35. Der CRC-Wert [g/g] der erfindungsgemäßen vernetzten quellbaren hydrogelbildenden Polymere kann nach den in der Beschreibung angegebenen Methoden gemessen werden.

Zur Verbesserung der Anwendungseigenschaften, wie beispielsweise Rewet in der Windel und absorbency under load (AUL), werden hydrophile, hochquellfähige Hydrogele im allgemeinen oberflächen- oder gelnachvernetzt. Diese Nachvernetzung erfolgt bevorzugt in wässriger Gelphase oder als Oberflächennachvernetzung der gemahlenen und abgesiebten Polymerpartikel.

Dazu geeignete Vernetzer sind Verbindungen, die mindestens zwei Gruppen enthalten, die mit den Carboxylgruppen des hydrophilen Polymeren kovalente Bindungen bilden können. Geeignete Verbindungen sind beispielsweise Di- oder Polyglycidylverbindungen, wie Phosphonsäurediglycidylester, Alkoxysilylverbindungen, Polyaziridine, Polyamine oder Polyamidoamine, wobei die genannten Verbindungen auch in Mischungen untereinander verwendet werden können (siehe beispielsweise die EP-A-0 083 022, EP-A-0 543 303 und EP-A-0 530 438).

Ein wesentlicher Nachteil dieser Vernetzer ist deren hohe Reaktivität, da diese besondere Schutzvorkehrungen im Produktionsbetrieb erforderlich macht, um unerwünschte Nebeneffekte zu vermeiden. Ebenso besitzen die vorgenannten Vernetzer hautreizende Eigenschaften, was bei der Verwendung in Hygieneartikeln problematisch erscheint.

Als Vernetzer sind auch polyfunktionelle Alkohole bekannt. Beispielsweise lehren die US-4,666,983 sowie US-5,385,983 die Verwendung von hydrophilen Polyalkoholen bzw. die Verwendung von Polyhydroxytensiden. Die Reaktion wird hiernach bei hohen Temperaturen von 120 bis 250°C durchgeführt. Das Verfahren hat den Nachteil, daß die zur Vernetzung führende Veresterungsreaktion selbst bei diesen Temperaturen nur langsam abläuft.

Desweiteren sind als Vernetzer in DE-A-198 07 502 2-Oxazolidon und dessen Derivate, in WO-A-03/031482 Morpholin-2,3-dion und dessen Derivate, in DE-A-198 54 573 2-Oxotetrahydro-1,3-oxazin und dessen Derivate, in DE-A-198 54 574 N-Acyl-2-Oxazolidone und in DE-A-198 07 992 Bis- und Poly-2-oxazolidinone als geeignete Vernetzer beschrieben. Diese erfüllen zwar die Anforderungen hinsichtlich einer Verwendung in Hygieneartikeln, sind aber als Verbindungen kommerziell nicht erhältlich und relativ schwierig in Reinform herstellbar.

Weiterhin sind als Vernetzer β-Hydroxyalkylamide in US-6,239,230 beschrieben. Auch diese sind gut geeignet für den Einsatz in Hygieneartikeln. Der Nachteil dieser Verbindungen liegt in den notwendigen relativ hohen Einsatzmengen und den damit zusammenhängenden Kosten.

Die JP-A-06 345978 beschreibt Zusammensetzungen, enthaltend Polymere mit aktiven Wasserstoffatomen und bicyclische Amidacetale. Die Zusammensetzungen können beispielsweise in den Bereichen Textilverarbeitung, Einbrennlacke und hitzebeständige Klebstoffe eingesetzt werden.

Die DE-A-37 20 883 betrifft druckempfindliche Klebstoffe, die bicyclischer Amidacetale enthalten. Die bicyclischen Amidacetale bewirken als Vernetzungsmittel die Härtung reaktiver Vinyl-Additionspolymerisate.

Die EP-A-0 346 669 offenbart härtbare Bindemittelkombinationen aus Verbindungen, die zwei Carbonsäureanhydridgruppen enthalten, und organischen Verbindungen mit blockierten Aminogruppen, die zumindest teilweise als bicyclische Amidacetalgruppen oder bicyclische Amidaminalgruppen vorliegen können.

Die US-A-4 539 376 beschreibt die Vernetzung von Polymeren auf Basis von Maleinsäureanhydrid mit bicyclischen Amidacetalen.

Es bestand daher die Aufgabe, unter Verwendung relativ reaktionsträger, aber dennoch mit Carboxylgruppen reaktionsfähiger Verbindungen eine ebenso gute oder bessere Gel- bzw. Oberflächennachvemetzung zu erreichen. Diese Aufgabe ist so zu lösen, daß die Reaktionszeit möglichst kurz und die Reaktionstemperatur möglichst niedrig sind.

Insbesondere bestand die Aufgabe Verbindungen zu finden, die bereits bei möglichst geringen Einsatzmengen eine gegenüber DE-A-198 54 573 und DE-A-198 54 574 vergleichbare oder bessere Gel- bzw. Oberflächennachvemetzung bewirken.

Überraschenderweise wurde nun gefunden, dass bicyclische Amidacetale als Vernetzer hervorragend zur

Lösung dieser Aufgabe geeignet sind.

Gegenstand der Erfindung ist ein Verfahren zur Nachvemetzung wasserabsorbierender Polymere, indem das Polymer mit einem Nachvemetzer behandelt und während oder nach dem Behandeln durch Temperaturerhöhung nachvemetzt und getrocknet wird, **dadurch gekennzeichnet, daß** der Nachvernetzer ein bicyclisches Amidacetal der Formel I

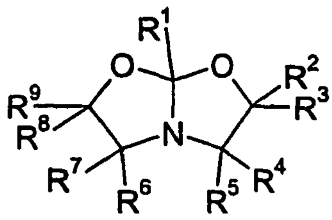

(I)

worin $R^1$, $R^2$, $R^3$, $R^4$, $R^5$, $R^6$, $R^7$, $R^8$, $R^9$ unabhängig voneinander Wasserstoff, $C_1$-$C_{12}$-Alkyl, $C_2$-$C_{12}$-Alkenyl oder $C_6$-$C_{12}$-Aryl bedeuten, wobei $C_1$-$C_{12}$-Alkyl, $C_2$-$C_{12}$-Alkenyl oder $C_6$-$C_{12}$-Aryl halogensubstituiert sein können, ist.

$C_3$-$C_{12}$-Alkyl, $C_3$-$C_{12}$-Alkenyl oder $C_8$-$C_{12}$-Aryl können verzweigt oder unverzweigt sein und Halogen ist Fluor, Chlor, Brom und/oder Jod.

Bevorzugt sind Amidacetale der Formel I, in der $R^1$ die obengenannte Bedeutung hat und $R^2$, $R^3$, $R^4$, $R^5$, $R^6$, $R^7$, $R^8$, $R^9$ unabhängig voneinander Wasserstoff, $C_1$-$C_6$-Alkyl, $C_2$-$C_6$-Alkenyl oder $C_6$-$C_7$-Aryl bedeuten, wobei $C_1$-$C_6$-Alkyl, $C_2$-$C_6$-Alkenyl oder $C_6$-$C_7$-Aryl halogen substituiert sein können.

$C_3$-$C_6$-Alkyl oder $C_3$-$C_6$-Alkenyl können verzweigt oder unverzweigt sein und Halogen ist Fluor und/oder Chlor.

Besonders bevorzugt sind Amidacetale der Formel I, in der $R^1$ $C_1$-$C_6$-Alkyl, $C_2$-$C_6$-Alkenyl oder $C_6$-$C_7$-Aryl und $R^2$, $R^4$, $R^6$, $R^8$ Wasserstoff sowie $R^3$, $R^5$, $R^7$, $R^9$ unabhängig voneinander Wasserstoff, $C_1$-$C_4$-Alkyl oder $C_2$-$C_4$-Alkenyl bedeuten, wobei $C_1$-$C_4$-Alkyl oder $C_2$-$C_4$-Alkenyl fluorsubstituiert sein können.

$C_3$-$C_4$-Alkyl oder $C_3$-$C_4$-Alkenyl können verzweigt oder unverzweigt sein.

Ganz besonders bevorzugt ist 1-Aza-4,6-dioxa-bicyclo[3.3.0]octan.

Ganz besonders bevorzugte Reste $R^1$ sind Wasserstoff, Methyl, Ethyl, Propyl, Prop-2-yl (Isopropyl), Butyl, But-2-yl (Isobutyl), Pentyl, Pent-2-yl, Pent-3-yl, 2-Methylpentyl, 3-Methylpentyl, 3-Methylpent-2-yl, 2,2-Dimethylpropyl, Trifluormethyl, Ethenyl, Propen-2-yl, Buten-2-yl, Phenyl, 2-Methylphenyl, 3-Methylphenyl und 4-Methylphenyl.

Ganz besonders bevorzugte Reste $R^3$, $R^5$, $R^7$, $R^9$ sind Wasserstoff, Methyl, Ethyl, Propyl, Prop-2-yl (Isopropyl), Butyl, But-2-yl (Isobutyl) und Trifluormethyl.

Die bicyclischen Amidacetale können beispielweise durch Umsetzung von Dialkanolaminen mit Dimethylformamiddimethylacetal, wie von Z. Arnold und M. Komilov in Coll. Czechoslov. Chem. Commun., Jahrgang 1964, Band 29, Seiten 645 bis 651, beschrieben oder durch Umsetzung von Dialkanolaminen mit Carbonsäurenitrilen, wie von K. Burzin und F. Feinauer in Angew. Chem., Jahrgang 1973, Band 85, Seiten 1055 bis 1056, beschrieben hergestellt werden.

Das bicyclische Amidacetal kann in Substanz oder als Lösung eingesetzt werden. Der Einsatz als Lösung in einem inerten Lösungsmittel ist bevorzugt. Weiterhin kann der Nachvemetzer dem Polymergel vor der Trocknung oder dem getrockneten Polymergel zugesetzt werden. Die Zugabe zum getrockneten Polymergel ist bevorzugt.

Die Aufbringung der Nachvemetzungslösung erfolgt bevorzugt durch Aufsprühen auf das Polymer in geeigneten Sprühmischem. Im Anschluß an das Aufsprühen wird das Polymerpulver thermisch getrocknet, wobei die Vernetzungsreaktion sowohl vor als auch während der Trocknung stattfinden kann. Bevorzugt ist das Aufsprühen einer Lösung des Vernetzers in Reaktionsmischem oder Misch- und Trocknungsanlagen wie beispielsweise Lödige-Mischer, BEPEX®-Mischer, NAUTA®-Mischer, SHUGGI®-Mischer oder PROCESSALL®. Überdies können auch Wirbelschichttrockner eingesetzt werden. Bevorzugt zur Nachvernetzung und Trocknung ist dabei der Temperaturbereich von 30 bis 200°C, insbesondere 80 bis 180°C, besonders bevorzugt 120 bis 170°C.

Die Trocknung kann im Mischer selbst erfolgen, durch Beheizung des Mantels oder Einblasen von Warmluft. Ebenso geeignet ist ein nachgeschalteter Trockner wie ein Hordentrockner, ein Drehrohrofen, oder eine beheizbare Schnecke. Es kann aber auch beispielsweise eine azeotrope Destillation als Trocknungsverfahren benutzt werden. Die bevorzugte Verweilzeit bei dieser Temperatur im Reaktionsmischer oder Trockner beträgt unter 120 Minuten, besonders bevorzugt unter 90 Minuten.

Der Nachvernetzer wird in inerten Lösungsmitteln gelöst. Der Nachvernetzer wird dabei in einer Menge von 0,01 bis 5 Gew.-%, bevorzugt 0,01 bis 1,0 Gew.-%, vorzugsweise 0,05 bis 0,5 Gew.-%, bezogen auf das eingesetzte Polymer, verwendet. Als inertes Lösemittel bevorzugt ist Wasser sowie Gemische von Wasser mit ein- oder mehrwertigen Alkoholen, beispielsweise einwertige, zweiwertige und dreiwertige Alkohole. Es können jedoch alle mit Wasser unbegrenzt mischbaren organischen Lösemittel eingesetzt werden, die nicht selbst unter den Verfahrensbedingungen reaktiv sind. Sofern ein Alkohol/Wasser-Gemisch eingesetzt wird, beträgt der Alkoholgehalt dieser Lösung beispielsweise 10 bis 90 Gew.-%, bevorzugt 15 bis 70-Gew.-%, insbesondere 20 bis 60 Gew.%. Es können alle mit Wasser unbeschränkt

mischbaren Alkohole eingesetzt werden, sowie Gemische mehrerer Alkohole (beispielsweise Methanol + Glycerin + Wasser). Die Alkoholgemische können die Alkohole in beliebigem Mischungsverhältnis enthalten. Besonders bevorzugt ist jedoch der Einsatz folgender Alkohole in wässriger Lösung: Methanol, Ethanol, Ethylenglykol und besonders bevorzugt Isopropanol, 1,2-Propandiol sowie 1,3-Propandiol.

Selbstverständlich kann der Nachvernetzer als nichtwässrige Lösung eingesetzt werden. In diesem Fall wird das getrocknete Hydrogel vor, während oder nach dem Aufsprühen der Nachvemetzerlösung mit Wasser angefeuchtet.

In einer weiteren bevorzugten Ausführungsform der Erfindung wird die Nachvernetzerlösung in einem Verhältnis von 0,5 bis 20 Gew.-%, bezogen auf die Masse des Polymeren eingesetzt. Besonders bevorzugt ist eine Lösungsmenge von 1 bis 10 Gew.-%, bezogen auf das Polymer.

Die erfindungsgemäßen Nachvernetzer können allein oder in Kombination mit anderen Nachvemetzem verwendet werden, beispielsweise Ethylenglykoldiglycidylether, Diethylenglykoldiglycidylether, Polyethylenglykoldiglycidylether, Propylenglykoldiglycidylether, Dipropylenglykoldiglycidylether, Polypropylenglykoldiglycidylether, Glycerindiglycidylether, Polyglycerindiglycidylether, Epichlorhydrin, Ethylendiamin, Ethylenglykol, Diethylenglykol, Triethylenglykol, Polyethylenglykol, Propylenglykol, Dipropylenglykol, Tripropylenglykol, Polypropylenglykol, Butylenglykol, 1,3-Propandiol, 1,4-Butandiol, Bisphenol A , Glycerin, Trimethylolpropan, Pentaerythrit, Sorbitol, Diethanolamin, Triethanolamin.

Ein weiterer Gegenstand der Erfindung sind vemetzte wasserabsorbierende Polymere, die nach dem erfindungsgemäßen Verfahren erhältlich sind.

Die im erfindungsgemäßen Verfahren einzusetzenden hydrophilen, hochquellfähigen Hydrogele sind insbesondere Polymere aus vernetzten (co)polymerisierten hydrophilen Monomeren, Polyasparaginsäure, Pfropf(co)polymere von einem oder mehreren hydrophilen Monomeren auf eine geeignete Pfropfgrundlage, vemetzte Cellulose- oder Stärkeether oder in wässrigen Flüssigkeiten quellbare Naturprodukte, wie beispielsweise Guarderivate. Bevorzugt handelt es sich bei dem zu vernetzenden Polymer um ein Polymer, das Struktureinheiten enthält, die sich von Acrylsäure oder deren Estern ableiten, oder die durch Pfropfcopolymerisation von Acrylsäure oder Acrylsäureestern auf eine wasserlösliche Polymermatrix erhalten wurden. Diese Hydrogele sind dem Fachmann bekannt und beispielsweise in der US-4 286 082, DE-C-27 06 135, US-A-4 340 706, DE-C-37 13 601, DE-C-28 40 010, DE-A-40 20 780, DE-A-40 15 085, DE-A-35 33 337, DE-A-35 03 458, DE-A-42 44 548, DE-A-40 21 847, DE-A-38 31 261, EP-A-0 467 073, EP-A-0 312 952, EP-A-0 499 774, DE-A 26 12 846, EP-A-0 205 674, US-A-5 145 906, EP-A-0 530 438, US-A-4 057 521, US-A-4 062 817, US-A-4 525 527, US-A-4 295 987, US-A-5 011 892, US-A-4 076 663 oder US-A-4 931 497 beschrieben.

Zur Herstellung dieser hydrophilen, hochquellfähigen Hydrogele geeignete hydrophile Monomere sind beispielsweise polymerisationsfähige Säuren, wie Acrylsäure, Methacrylsäure, Vinylsulfonsäure, Vinylphosphonsäure, Maleinsäure einschließlich deren Anhydrid, Fumarsäure, Itaconsäure, 2-Acrylamido-2-methylpropansulfonsäure, 2-Acrylamido-2-methylpropanphosphonsäure sowie deren Amide, Hydroxyalkylester und aminogruppen- oder ammoniumgruppenhaltige Ester und Amide sowie die Alkalimetall- und/oder Ammoniumsalze der Säuregruppen enthaltenden Monomeren. Des weiteren eignen sich wasserlösliche N-Vinylamide wie N-Vinylformamid oder auch Diallyldimethyl-ammoniumchlorid. Bevorzugte hydrophile Monomere sind Verbindungen der allgemeinen Formel II

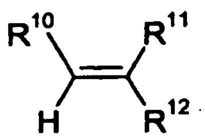

(II)

worin

$R^{10}$ Wasserstoff, Methyl, Ethyl oder Carboxyl,

$R^{11}$ -$COOR^{13}$, Hydroxysulfonyl oder Phosphonyl, eine mit einem $C_1$-$C_4$-Alkanol ve- resterte Phosphonylgruppe oder eine Gruppe der Formel III

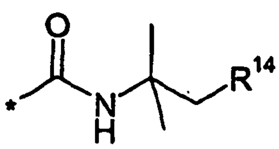

(III)

$R^{12}$ Wasserstoff, Methyl oder Ethyl,

$R^{13}$ Wasserstoff, $C_1$-$C_4$-Aminoalkyl, $C_1$-$C_4$-Hydroxyalkyl, Alkalimetall- oder Ammoni- umion und

$R^{14}$ eine Sulfonylgruppe, eine Phosphonylgruppe oder eine Carboxylgruppe oder jeweils deren Alkalimetall- oder Ammoniumsalze, bedeuten.

Beispiele für $C_1$-$C_4$-Alkanole sind Methanol, Ethanol, n-Propanol, Isopropanol oder n-Butanol.

Besonders bevorzugte hydrophile Monomere sind Acrylsäure und Methacrylsäure, sowie deren Alkalimetall- oder Ammoniumsalze, beispielsweise Natriumacrylat, Kaliumacrylat oder Ammoniumacrylat.

Geeignete Pfropfgrundlagen für hydrophile Hydrogele, die durch Pfropfcopolymerisation olefinisch ungesättigter Säuren oder ihrer Akalimetall- oder Ammoniumsalze erhältlich sind, können natürlichen oder synthetischen Ursprungs sein. Beispiele sind Stärke, Cellulose oder Cellulosederivate sowie andere Polysaccharide und Oligosaccharide, Polyalkylenoxide, insbesondere Polyethylenoxide und Polypropylenoxide, sowie hydrophile Polyester.

Geeignete Polyalkylenoxide haben beispielsweise die Formel IV

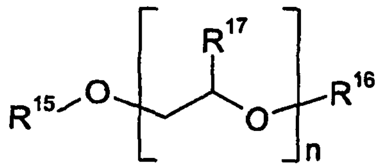

(IV)

worin

$R^{15}$, $R^{16}$ unabhängig voneinander Wasserstoff, Alkyl, Alkenyl oder Aryl,

$R^{17}$ Wasserstoff oder Methyl und

n eine ganze Zahl von 1 bis 500 bedeuten.

$R^{15}$ und $R^{16}$ bedeuten bevorzugt Wasserstoff, $C_1$-$C_4$-Alkyl, $C_2$-$C_6$-Alkenyl oder Phenyl.

Bevorzugte Hydrogele sind insbesondere Polyacrylate, Polymethacrylate sowie die in der US-4,931,497, US-5,011,892 und US-5,041,496 beschriebene Pfropfpolymere.

Die hydrophilen, hochquellfähigen Hydrogele sind bevorzugt vernetzt, d.h. sie enthalten Verbindungen mit mindestens zwei Doppelbindungen, die in das Polymernetzwerk einpolymerisiert sind. Geeignete Vernetzer sind insbesondere N,N'-Methylenbisacrylamid und N,N'-Methylenbismethacrylamid, Ester ungesättigter Mono- oder Polycarbonsäuren von Polyolen, wie Diacrylat oder Triacrylat, beispielsweise Butandiol-oder Ethylendiacrylat bzw. -methacrylat sowie Trimethylolpropantriacrylat und Allylverbindungen wie Allyl(meth)acrylat, Triallylcyanurat, Maleinsäurediallylester, Polyallylester, Tetraallyloxyethan, Triallylamin, Tetraallylethylendiamin, Allylester der Phosphorsäure sowie Vinylphosphonsäurederivate, wie sie beispielsweise in EPAO 343 427 beschrieben sind. Weiterhin einsetzbar im erfindungsgemäßen Verfahren sind auch Hydrogele, die unter Verwendung von Polyallylethern als Vernetzer und durch saure Homopolymerisation von Acrylsäure hergestellt werden. Geeignete Vernetzer sind Pentaerythritoltri- und -tetraallylether, Polyethylenglykoldiallylether, Monoethylenglykoldiallylether, Glyceroldi- und Triallylether, Polyallylether auf Basis Sorbitol, sowie ethoxilierte Varianten davon.

Die bevorzugten Herstellverfahren für das im erfindungsgemäßen Verfahren einsetzbare Basispolymer werden in "Modem Superabsorbent Polymer Technology", F.L. Buchholz and A.T. Graham, Wiley-VCH, 1998, Seiten 77 bis 84 beschrieben. Besonders bevorzugt sind Bassispolymere, die im Kneter, wie beispielsweise in WO-A-01/38402 beschrieben, oder auf einem Bandreaktor, wie beispielsweise in EP-A-0 955 086 beschrieben, hergestellt werden.

Das wasserabsorbierende Polymer ist bevorzugt eine polymere Acrylsäure oder ein Polyacrylat. Die Herstellung dieses wasserabsorbierenden Polymeren kann nach einem aus der Literatur bekannten Verfahren erfolgen. Bevorzugt sind Polymere, die vernetzende Comonomere in Mengen von 0,001 bis 10 mol-%, vorzugsweise 0,01 bis 1 mol-% enthalten, ganz besonders bevorzugt sind jedoch Polymere, die durch radikalische Polymerisation erhalten wurden und bei denen ein mehrfunktioneller ethylenisch ungesättigter Radikalvernetzer verwendet wurde, der zusätzlich noch mindestens eine freie Hydroxylgruppe trägt (wie beispielsweise Pentaerythritoltriallylether oder Trimethylolpropandiallylether).

Die hydrophilen, hochquellfähigen Hydrogele können durch an sich bekannte Polymerisationsverfahren hergestellt werden. Bevorzugt ist die Polymerisation in wässriger Lösung nach dem Verfahren der sogenannten Gelpolymerisation. Dabei werden beispielsweise 15 bis 50 gew.-%ige wässrige Lösungen eines oder mehrerer hydrophiler Monomere und gegebenenfalls einer geeigneten Pfropfgrundlage in Gegenwart eines Radikalinitiators, bevorzugt ohne mechanische Durchmischung unter Ausnutzung des Trommsdorff-Norrish-Effektes (Makromol. Chem. 1, 169 (1947)), polymerisiert. Die Polymerisationsreaktion kann im Temperaturbereich zwischen 0 und 150°C, vorzugsweise zwischen 10 und 100°C, sowohl bei Normaldruck als auch unter erhöhtem oder erniedrigtem Druck durchgeführt werden. Wie üblich kann die Polymerisation auch in einer Schutzgasatmosphäre, vorzugsweise unter Stickstoff, ausgeführt werden, zur Auslösung der Polymerisation können energiereiche elektromagnetische Strahlen oder die üblichen chemischen Polymerisationsinitiatoren herangezogen werden, beispielsweise organische Peroxide, wie Benzoylperoxid, tert.-Butylhydroperoxid, Methylethylketonperoxid, Cumolhydroperoxid, Azoverbindungen wie Azodiisobutyronitril sowie anorganische Peroxoverbindungen wie $(NH_4)_2S_2O_8 \cdot K_2S_2O_8$ oder $H_2O_2$. Sie können gegebenenfalls in Kombination mit Reduktionsmitteln wie Natriumhydrogensulfit und Eisen(II)-sulfat oder Redoxsystemen, welche als reduzierende Komponente eine aliphatische und aromatische Sulfinsäure, wie Benzolsulfinsäure und Toluolsulfinsäure oder Derivate dieser Säuren enthalten, wie Mannichaddukte aus Sulfinsäuren, Aldehyden und Aminoverbindungen, wie sie in der DE-A-13 01 566 beschrieben sind, verwendet werden. Durch mehrstündiges Nachheizen der Polymergele im Temperaturbereich 50 bis 130°C, vorzugsweise 70 bis 100°C, können die Qualitätseigenschaften der Polymere noch verbessert werden.

Die erhaltenen Gele werden beispielsweise zu 0 bis 100 mol-%, bevorzugt 25 bis 100 mol-% und besonders bevorzugt zu 50 bis 85 mol-%, bezogen auf eingesetztes Monomer neutralisiert, wobei die üblichen Neutralisationsmittel verwendet werden können, bevorzugt Alkalimetallhydroxide oder -oxide, besonders bevorzugt jedoch Natriumhydroxid, Natriumcarbonat und Natriumhydrogencarbonat.

Üblicherweise wird die Neutralisation durch Einmischung des Neutralisationsmittels als wässrige Lösung oder bevorzugt auch als Feststoff erreicht. Das Gel wird hierzu mechanisch zerkleinert, beispielsweise mittels eines Fleischwolfes und das Neutralisationsmittel wird aufgesprüht, übergestreut oder aufgegossen, und dann sorgfältig untergemischt. Dazu kann die erhaltene Gelmasse noch mehrmals zur Homogenisierung gewolft werden. Die neutralisierte Gelmasse wird dann mit einem Band- oder Walzentrockner getrocknet bis der Restfeuchtegehalt vorzugsweise unter 10 Gew.-%, insbesondere unter 5 Gew.-% liegt. Das getrocknete Hydrogel wird hiernach gemahlen und gesiebt, wobei zur Mahlung üblicherweise Walzenstühle, Stiftmühlen oder Schwingmühlen eingesetzt werden können. Die Partikelgröße des gesiebten Hydrogels liegt vorzugsweise im Bereich 45 bis 1000 μm, besonders bevorzugt bei 45-850 μm, ganz besonders bevorzugt bei 100 bis 800 μm und noch mehr bevorzugt bei 100 bis 700 μm.

Der AUL-0,7psi-Wert [g/g] der erfindungsgemäßen nachvernetzten wasserabsorbierenden Polymere kann nach den in der Beschreibung angegebenen Methoden gemessen werden und ist bevorzugt größer 10, insbesondere größer 15, besonders bevorzugt größer 20, insbesondere größer 25, insbesondere bevorzugt größer 30.

Zur Bestimmung der Güte der Oberflächennachvemetzung wir das getrocknete Hydrogel mit den Testmethoden geprüft, die nachfolgend beschrieben sind:

Methoden:

Zentrifugenretentionskapazität (CRC Centrifuge Retention Capacity)

Bei dieser Methode wird die freie Quellbarkeit des Hydrogels im Teebeutel bestimmt. Zur Bestimmung der CRC werden 0,2000 ± 0,0050 g getrocknetes Hydrogel (Kornfraktion 106 - 850 μm) in einem 60 x 85 mm großen Teebeutel eingewogen, der anschließend verschweißt wird. Der Teebeutel wird für 30 Minuten in einen Überschuss von 0,9 gew.-%iger Kochsalzlösung gegeben (mindestens 0,83 l Kochsalzlösung/1 g Polymerpulver). Anschließend wird der Teebeutel 3 Minuten lang bei 250 G zentrifugiert. Die Bestimmung der vom Hydrogel festgehaltenen Flüssigkeitsmenge geschieht durch Auswägen des zentrifugierten Teebeutels.

Absorption unter Druck (AUL Absorbency Under Load) 0,5/0,7 psi (3450/4830 Pa)

Die Messzelle zur Bestimmung der AUL 0,5/0,7 psi ist ein Plexiglas-Zylinder mit einem Innendurchmesser von 60 mm und einer Höhe von 50 mm, der an der Unterseite einen angeklebten Edelstahl-Siebboden mit einer Maschenweite von 36 μm besitzt. Zu der Messzelle gehört weiterhin eine Plastikplatte mit einem Durchmesser von 59 mm und ein Gewicht, welches zusammen mit der Plastikplatte in die Messzelle hineingestellt werden kann. Das Gewicht der Plastikplatte und das Gewicht betragen zusammen 960 bzw. 1344 g. Zur Durchführung der Bestimmung der AUL 0,5/0,7 psi wird das Gewicht des leeren Plexiglas-Zylinders und der Plastikplatte ermittelt und als $W_0$ notiert. Dann werden 0,900 ± 0,005 g Hydrogel-formendes Polymer (Korngrößenverteilung 150 - 800 μm) in den Plexiglas-Zylinder eingewogen und möglichst gleichmäßig auf dem Edelstahl-Siebboden verteilt. Anschließend wird die Plastikplatte vorsichtig in den Plexiglas-Zylinder hineingelegt und die gesamte Einheit gewogen; das Gewicht wird als $W_a$ notiert. Nun wird das Gewicht auf die Plastikplatte in dem Plexiglas-Zylinder gestellt. In die Mitte der Petrischale mit einem Durchmesser von

200 mm und einer Höhe von 30 mm wird eine keramische Filterplatte mit einem Durchmesser von 120 mm, einer Höhe von 10mm und einer Porosität 0 gelegt und soviel 0,9 gew.%ige Natriumchforidlösung eingefüllt, dass die Flüssigkeitsoberfläche mit der Filterplattenoberfläche abschließt, ohne dass die Oberfläche der Filterplatte benetzt wird..Anschließend wird ein rundes Filterpapier mit einem Durchmesser von 90 mm und einer Porengröße < 20 μm (S&S 589 Schwarzband von Schleicher & Schüll) auf die keramische Platte gelegt. Der Hydrogel-formendes Polymer enthaltende Plexiglas-Zylinder wird mit Plastikplatte und Gewicht nun auf das Filterpapier gestellt und dort für 60 Minuten belassen. Nach dieser Zeit wird die komplette Einheit aus der Petrischale vom Filterpapier herausgenommen und anschließend das Gewicht aus dem Plexiglas-Zylinder entfernt. Der gequollenes Hydrogel enthaltende Plexiglas-Zylinder wird zusammen mit der Plastikplatte ausgewogen und das Gewicht als $W_b$ notiert.

Die Absorption unter Druck (AUL) wird wie folgt berechnet:

$$\text{AUL } 0{,}5/0{,}7 \text{ psi } [g/g] = [W_b - W_a]/[W_a - W_0]$$

Beispiele

Beispiel 1

In einen Lödige-Pflugscharkneter Typ VT 5R-MK (5 l Volumen) werden 388 g entionisiertes Wasser, 173,5 g Acrylsäure, 2033,2 g einer 37,3 gew.-%igen Natriumacrylatlösung (100 mol% neutralisiert) sowie 4,50 g ethoxiliertes (15 EO) Trimethylolpropantriacrylat (Sartomer®SR 9035, Fa. Sartomer) vorgelegt und unter Durchperlen von Stickstoff 20 Minuten inertisiert. Dann wird durch Zusatz (verdünnte wässrige Lösungen) von 2,112 g Natriumpersulfat, 0,045 g Ascorbinsäure sowie 0,126 g Wasserstoffperoxid bei ca. 23 °C gestartet. Nach dem Start wird die Temperatur des Heizmantels der Reaktionstemperatur im Reaktor mittels Regelung nachgeführt. Das letztlich erhaltene krümelige Gel wird dann bei 160°C ca. 3 h im Umlufttrockenschrank getrocknet. Anschliessend wird gemahlen und auf 250-850 Mikrometer abgesiebt. Das erhaltene Hydrogel wird hernach oberflächennachvernetzt. Die AUL-0,3psi-Wert des Grundpolymers beträgt 17 g/g und der Wassergehalt beträgt 2,7 Gew.%.

Beispiele 2 bis 36

Grundpolymer gemäß Beispiel 1 wird in einem Waring-Labormischer mit Vernetzer-Lösung besprüht. Die Lösung ist dabei so zusammengesetzt, dass folgende Dosierung, bezogen auf eingesetztes Grundpolymer, erreicht wird: 0,10 Gew.-% bicyclisches Amidacetal, 1,5 Gew.-% Isopropanol bzw.1,2-Propandiol und 3,5 Gew.-% Wasser. Das feuchte Polymer wird dann bei der angegebenen Temperatur für 60 Minuten getrocknet.

| | |
|---|---|
| Vernetzer 1: | 5-Methyl-1-aza-4,6-dioxa-bicyclo[3.3.0]octan |
| Vernetzer 2: | 1-Aza-4,6-dioxa-bicyclo[3.3.0]octan |
| Vernetzer 3: | 5-Isopropyl-1-aza-4,6-dioxa-bicyclo[3.3.0]octan |
| Vernetzer 4: | 5-Butyl-1-aza-4,6-dioxa-bicyclo[3.3.0]octan |
| Vernetzer 5: | 5-Butyl-1-aza-3,7-dimethyl-4,6-dioxa-bicyclo[3.3.0]octan |
| Vernetzer 6: | 5-Propyl-1-aza-3,7-dimethyl-4,6-dioxa-bicyclo[3.3.0]octan |
| Vernetzer 7: | 5-Isopropyl-1-aza-3,7-dimethyl-4,6-dioxa-bicyclo[3.3.0]octan |
| Vernetzer 8: | 5-Ethyl-1-aza-4,6-dioxa-bicyclo[3.3.0]octan |
| Vernetzer 9: | 5-Ethyl-1-aza-3,7-dimethyl-4,6-dioxa-bicyclo[3.3.0]octan |
| Vernetzer 10: | 5-Propyl-1-aza-4,6-dioxa-bicyclo[3.3.0]octan |
| Vernetzer 11: | 5-Trifluormethyl-1-aza-4,6-dioxa-bicyclo[3.3.0]octan |

Die gemäß obigen Beispielen hergestellten Polymere wurden getestet und die Ergebnisse sind in nachfolgender Tabelle 1 zusammengefaßt:

Tabelle 1

| | Trocknungstemperatur | Vernetzer | Lösemittel | CRC (g/g) | AUL 0,5 psi (g/g) | AUL 0,7 psi g/g) |
|---|---|---|---|---|---|---|
| Beispiel 1 rundpolymer | - | - | - | 37,0 | | |
| Beispiel 2 | 150°C | Vernetzer 1 | Isopropanol/ Wasser | 37,0 | 14,2 | 9,5 |
| Beispiel 3 | 175°C | Vernetzer 1 | Isopropanol/ Wasser | 32,1 | 27,3 | 24,2 |
| Beispiel 4 | 150°C | Vernetzer 1 | 1,2-Propandiol/ Wasser | 31,6 | 24,9 | 22,2 |
| Beispiel 5 | 160°C | Vernetzer 1 | Isopropanol/ Wasser | 33,7 | 25,4 | 22,1 |
| Beispiel 6 | 150°C | Vernetzer 2 | Isopropanol/ Wasser | 38,1 | 8,6 | 7,8 |
| Beispiel 7 | 175°C | Vernetzer 2 | Isopropanol/ Wasser | 34,1 | 28,2 | 24,7 |
| Beispiel 8 | 150°C | Vernetzer 2 | 1,2-Propandiol/ Wasser | 35,9 | 22,3 | 16,0 |
| Beispiel 9 | 160°C | Vernetzer 2 | Isopropanol/ Wasser | 35,4 | 25,5 | 21,0 |
| Beispiel 10 | 150°C | Vernetzer 3 | Isopropanol/ Wasser | 37,4 | 16,1 | 10,5 |
| Beispiel 11 | 175°C | Vernetzer 3 | Isopropanol/ Wasser | 31,8 | 26,0 | 23,4 |
| Beispiel 12 | 150°C | Vernetzer 3 | 1,2-Propandiol/ Wasser | 29,8 | 25,1 | 22,1 |
| Beispiel 13 | 150°C | Vernetzer 4 | Isopropanol/ Wasser | 38,3 | 10,2 | 8,0 |
| Beispiel 14 | 175°C | Vernetzer 4 | Isopropanol/ Wasser | 34,3 | 27,9 | 23,8 |
| Beispiel 15 | 150°C | Vernetzer 4 | 1,2-Propandiol/ Wasser | 30,8 | 26,2 | 23,5 |
| Beispiel 16 | 150°C | Vernetzer 5 | Isopropanol/ Wasser | 38,2 | 8,3 | 7,4 |
| Beispiel 17 | 175°C | Vernetzer 5 | Isopropanol/ Wasser | 38,2 | 26,0 | 10,2 |
| Beispiel 18 | 150°C | Vernetzer 5 | 1,2-Propandiol/ Wasser | 35,0 | 22,2 | 15,7 |
| Beispiel 19 | 150°C | Vernetzer 6 | Isopropanol/ Wasser | 38,1 | 8,5 | 7,5 |
| Beispiel 20 | 175°C | Vernetzer 6 | Isopropanol/ Wasser | 37,1 | 17,0 | 11,7 |

(fortgesetzt)

| | Trocknungstemperatur | Vernetzer | Lösemittel | CRC (g/g) | AUL 0,5 psi (g/g) | AUL 0,7 psi g/g) |
|---|---|---|---|---|---|---|
| Beispiel 21 | 150°C | Vernetzer 6 | 1,2-Propandiol/ Wasser | 34,6 | 25,4 | 19,9 |
| Beispiel 22 | 150°C | Vernetzer 7 | Isopropano/ Wasser | 38,6 | 9,6 | 7,5 |
| Beispiel 23 | 175°C | Vernetzer 7 | Isopropanol/ Wasser | 37,8 | 18,1 | 12,8 |
| Beispiel 24 | 150°C | Vernetzer 7 | 1,2-Propandiol/ Wasser | 33,3 | 25,7 | 21,5 |
| Beispiel 25 | 150°C | Vernetzer 8 | Isopropanol/ Wasser | 36,6 | 21,7 | 14,5 |
| Beispiel 26 | 175°C | Vernetzer 8 | Isopropanol/ Wasser | 31,3 | 24,6 | 21,5 |
| Beispiel 27 | 150°C | Vernetzer 8 | 1,2-Propandiol/ Wasser | 30,0 | 24,0 | 21,2 |
| Beispiel 28 | 150°C | Vernetzer 9 | Isopropanol/ Wasser | 38,2 | 8,9 | 7,8 |
| Beispiel 29 | 175°C | Vernetzer 9 | Isopropanol/ Wasser | 36,7 | 23,3 | 17,1 |
| Beispiel 30 | 150°C | Vernetzer 9 | 1,2-Propandiol/ Wasser | 33,9 | 26,6 | 22,3 |
| Beispiel 31 | 150°C | Vernetzer 10 | Isopropanol/ Wasser | 37,4 | 13,1 | 9,0 |
| Beispiel 32 | 175°C | Vernetzer 10 | Isopropanol/ Wasser | 33,3 | 26,4 | 24,1 |
| Beispiel 33 | 150°C | Vernetzer 10 | 1,2-Propandiol/ Wasser | 31,5 | 25,6 | 22,8 |
| Beispiel 34 | 150°C | Vernetzer 11 | Isopropanol/ Wasser | 38,0 | 8,4 | 7,7 |
| Beispiel 35 | 175°C | Vernetzer 11 | Isopropanol/ Wasser | 37,8 | 17,7 | 12,3 |
| Beispiel 36 | 150°C | Vernetzer 11 | 1,2-Propandiol/ Wasser | 35,7 | 12,9 | 9,0 |

## Patentansprüche

**1.** Verfahren zur Nachvernetzung wasserabsorbierender Polymere, indem das Polymere mit einem Nachvemetzer behandelt und während oder nach dem Behandeln durch Temperaturerhöhung nachvemetzt und getrocknet wird, **dadurch gekennzeichnet, dass** der Nachvemetzer eine Verbindung der Formel I

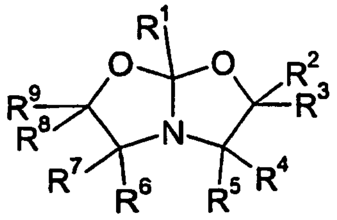

(I)

worin $R^1$, $R^2$, $R^3$, $R^4$, $R^5$, $R^6$, $R^7$, $R^8$, $R^9$ unabhängig voneinander Wasserstoff, $C_1$-$C_{12}$-Alkyl, $C_2$-$C_{12}$-Alkenyl oder $C_6$-$C_{12}$-Aryl bedeuten, wobei $C_1$-$C_{12}$-Alkyl, $C_2$-$C_{12}$-Alkenyl oder $C_6$-$C_{12}$-Aryl halogensubstituiert sein können, ist.

2. Verfahren gemäß Anspruch 1, **dadurch gekennzeichnet, dass** der Nachvemetzer der Formel I, worin $R^1$ $C_1$-$C_6$-Alkyl, $C_2$-$C_6$-Alkenyl oder $C_6$-$C_7$-Aryl und $R^2$, $R^4$, $R^6$, $R^8$ Wasserstoff sowie $R^3$, $R^5$, $R^7$, $R^9$ unabhängig voneinander Wasserstoff, $C_1$-$C_4$-Alkyl oder $C_2$-$C_4$-Alkenyl bedeuten, wobei $C_1$-$C_4$-Alkyl oder $C_2$-$C_4$-Alkenyl fluorsubstituiert sein können, ist

3. Verfahren gemäß Anspruch 1, **dadurch gekennzeichnet, dass** der Nachvemetzer 1-Aza-4,6-dioxa-bicyclo[3.3.0]octan ist.

4. Verfahren nach einem der Ansprüche 1 bis 3, **dadurch gekennzeichnet, dass** es sich bei dem zu vernetzenden Polymer um ein Polymer handelt, das Struktureinheiten enthält, die sich von Acrylsäure oder deren Estern ableiten, oder die durch Pfropfcopolymerisation von Acrylsäure oder Acrylsäureestern auf eine wasserlösliche Polymermatrix erhalten wurden.

5. Verfahren nach einem der Ansprüche 1 bis 4, **dadurch gekennzeichnet, dass** der Oberflächennachvernetzer als Lösung in einem inerten Lösungsmittel eingesetzt wird.

6. Verfahren nach Anspruch 5, **dadurch gekennzeichnet, dass** es sich bei dem inerten Lösungmittel um wässrige Lösungen von Glycerin, Methanol, Ethanol, Isopropanol, Ethylenglykol, 1,2-Propandiol und/oder 1,3-Propandiol handelt.

7. Verfahren nach einem oder mehreren der Ansprüche 1 bis 6, **dadurch gekennzeichnet, dass** das inerte Lösemittel Wasser oder eine Mischung von Wasser mit mono- oder mehrfachfunktionellen Alkoholen mit 10 bis 90 Gew.-% Alkohol ist.

8. Verfahren nach einem oder mehreren der Ansprüche 1 bis 7, **dadurch gekennzeichnet, dass** der Vernetzer in einer Menge von 0,01 bis 5 Gew.-%, bezogen auf das Gewicht des Polymeren verwendet wird.

9. Wasserabsorbierende Polymere, erhältlich gemäß dem Verfahren der Ansprüche 1 bis 8.

10. Wasserabsorbierende Polymere nach Anspruch 9, **dadurch gekennzeicnet, dass** die Absorption unter Druck (AUL) bei 0,7 psi (4830 Pa) mindestens 15 g/g beträgt.

11. Verwendung der wasserabsorbierenden Polymere gemäß Anspruch 9 oder 10 in Hygieneartikeln und Verpackungsmaterialien.

## Claims

1. A process for postcrosslinking a water-absorbing polymer, which process comprises said polymer being treated with a postcrosslinker and, during or after said treating, being postcrosslinked and dried by temperature elevation, said postcrosslinker being a compound of the formula I

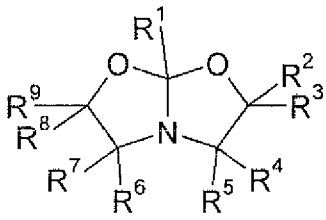

(I)

where $R^1$, $R^2$, $R^3$, $R^4$, $R^5$, $R^6$, $R^7$, $R^8$ and $R^9$ are each independently hydrogen, $C_1$-$C_{12}$-alkyl, $C_2$-$C_{12}$-alkenyl or $C_6$-$C_{12}$-aryl, wherein $C_1$-$C_{12}$-alkyl, $C_2$-$C_{12}$-alkenyl or $C_6$-$C_{12}$-aryl may be halogen substituted.

2. The process as per claim 1, wherein said postcrosslinker is of the formula I where $R^1$ is $C_1$-$C_6$-alkyl, $C_2$-$C_6$-alkenyl or $C_6$-$C_7$-aryl, $R^2$, $R^4$, $R^6$ and $R^8$ are each hydrogen and $R^3$, $R^5$, $R^7$ and $R^9$ are each independently hydrogen, $C_1$-$C_4$-alkyl or $C_2$-$C_4$-alkenyl, wherein $C_1$-$C_4$-alkyl or $C_2$-$C_4$-alkenyl may be fluorine substituted.

3. The process as per claim 1, wherein said postcrosslinker is 1-aza-4,6-dioxabicyclo[3.3.0]octane.

4. The process according to any of claims 1 to 3, wherein said polymer to be crosslinked is a polymer which comprises structural units which are derived from acrylic acid or acrylic esters or which were obtained by graft copolymerization of acrylic acid or acrylic esters onto a water-soluble polymeric matrix.

5. The process according to any of claims 1 to 4, wherein said postcrosslinker is a surface postcrosslinker which is used as a solution in an inert solvent.

6. The process according to claim 5, wherein said inert solvent comprises aqueous solutions of glycerol, methanol, ethanol, isopropanol, ethylene glycol, 1,2-propanediol and/or 1,3-propanediol.

7. The process according to one or more of claims 1 to 6, wherein said inert solvent is water or a mixture of water with mono- or polyfunctional alcohols which has an alcohol content in the range from 10% to 90% by weight.

8. The process according to one or more of claims 1 to 7, wherein said crosslinker is used in an amount from 0.01% to 5% by weight, based on the weight of said polymer.

9. Water-absorbing polymer obtainable as per the process of claims 1 to 8.

10. Water-absorbing polymer according to claim 9, **characterized by** an absorbency under load (AUL) at 0.7 psi (4830 Pa) of at least 15 g/g.

11. The use of the water-absorbing polymer as per claim 9 or 10 in hygiene articled and packaging materials.

**Revendications**

1. Procédé pour la post-réticulation de polymère absorbant l'eau, par traitement du polymère par un agent de post-réticulation et, pendant ou après le traitement, post-réticulation et séchage par élévation de la température, **caractérisé en ce que** l'agent de post-réticulation est un composé de formule I

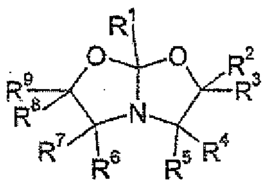

(I)

dans laquelle $R^1$, $R^2$, $R^3$, $R^4$, $R^5$, $R^6$, $R^7$, $R^8$, $R^9$ représentent, indépendamment les uns des autres, un atome

d'hydrogène, un groupe alkyle en $C_1$-$C_{12}$, alcényle en $C_2$-$C_{12}$ ou aryle en $C_6$-$C_{12}$, les groupes alkyle en $C_1$-$C_{12}$, alcényle en $C_2$-$C_{12}$ ou aryle en $C_6$-$C_{12}$ pouvant être substitués par halogène.

**2.** Procédé selon la revendication 1, **caractérisé en ce que** l'agent de post-réticulation est de formule I, dans laquelle $R^1$ représente un groupe alkyle en $C_1$-$C_6$, alcényle en $C_2$-$C_6$ ou aryle en $C_6$-$C_7$ et $R^2$, $R^4$, $R^6$, $R^8$ représentent des atomes d'hydrogène et $R^3$, $R^5$, $R^7$, $R^9$ représentent, indépendamment les uns des autres, un atome d'hydrogène, un groupe alkyle en $C_1$-$C_4$ ou alcényle en $C_2$-$C_4$, les groupes alkyle en $C_1$-$C_4$ ou alcényle en $C_2$-$C_4$ pouvant être substitués par le fluor.

**3.** Procédé selon la revendication 1, **caractérisé en ce que** l'agent de post-réticulation est le 1-aza-4,6-dioxa-bicyclo [3.3.0]octane.

**4.** Procédé selon l'une quelconque des revendications 1 à 3, **caractérisé en ce que** le polymère à réticuler est un polymère qui contient des motifs structuraux qui décrivent de l'acide acrylique ou de ses esters, ou qui ont été obtenus par copolymérisation par greffage d'acide acrylique ou d'esters d'acide acrylique sur une matrice polymère hydrosoluble.

**5.** Procédé selon l'une quelconque des revendications 1 à 4, **caractérisé en ce que** l'agent de post-réticulation superficielle est utilisé sous forme de solution dans un solvant inerte.

**6.** Procédé selon la revendication 5, **caractérisé en ce que** le solvant inerte consiste en des solutions aqueuses de glycérol, méthanol, éthanol, isopropanol, éthylèneglycol, 1,2-propanediol et/ou 1,3-propanediol.

**7.** Procédé selon une ou plusieurs des revendications 1 à 6, **caractérisé en ce que** le solvant inerte est l'eau ou un mélange d'eau avec des alcools mono- ou polyfonctionnels contenant de 10 à 90 % en poids d'alcool.

**8.** Procédé selon une ou plusieurs des revendications 1 à 7, **caractérisé en ce que** l'agent de réticulation est utilisé en une quantité de 0,01 à 5 % en poids, par rapport au poids du polymère.

**9.** Polymères absorbant l'eau, pouvant être obtenus selon le procédé des revendications 1 à 8.

**10.** Polymères absorbant l'eau selon la revendication 9, **caractérisés en ce que** l'absorption sous pression (AUL) sous 0,7 psi (4 830 Pa) est d'au moins 15 g/g.

**11.** Utilisation des polymères absorbants l'eau selon la revendication 9 ou 10, dans des articles d'hygiène et des matériaux d'emballage.

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente


- EP 0083022 A
- EP 0543303 A
- EP 0530438 A
- US 4666983 A
- US 5385983 A
- DE 198075022 A
- WO 03031482 A
- DE 198545732 A
- DE 19807992 A
- US 6239230 B
- JP 6345978 A
- DE 3720883 A
- EP 0346669 A
- US 4539376 A
- DE 19854573 A
- DE 19854574 A
- US 4286082 A
- DE 2706135 C
- US 4340706 A
- DE 3713601 C
- DE 2840010 C
- DE 4020780 A
- DE 4015085 A
- DE 3533337 A
- DE 3503458 A
- DE 4244548 A
- DE 4021847 A
- DE 3831261 A
- EP 0467073 A
- EP 0312952 A
- EP 0499774 A
- DE 2612846 A
- EP 0205674 A
- US 5145906 A
- US 4057521 A
- US 4062817 A
- US 4525527 A
- US 4295987 A
- US 5011892 A
- US 4076663 A
- US 4931497 A
- US 5041496 A
- WO 0138402 A
- EP 0955086 A
- DE 1301566 A


### In der Beschreibung aufgeführte Nicht-Patentliteratur


- **Z. Arnold ; M. Komilov.** *Coll. Czechoslov. Chem. Commun.,* 1964, vol. 29, 645-651
- **K. Burzin ; F. Feinauer.** *Angew. Chem.,* 1973, vol. 85, 1055-1056
- **F.L. Buchholz ; A.T. Graham.** Modem Superabsorbent Polymer Technology. Wiley-VCH, 1998, 77-84
- *Makromol. Chem.,* 1947, vol. 1, 169